# EUROPÄISCHE PATENTANMELDUNG

(11) **EP 2 390 513 A1**
(43) Veröffentlichungstag der Anmeldung: **30.11.2011**
(21) Anmeldenummer: 11006969.7
(22) Anmeldetag: 13.06.2008
(51) Int. Cl.: F16B 7/04, F16B 2/12

(54) **Vorrichtung zum Verbinden einer Profilschiene mit einem anderen Bauteil**

(30) Priorität: 13.06.2007 DE 202007008471 U
(62) Teilanmeldung aus: 08010792.3
(71) Anmelder: Schletter GmbH, 83527 Kirchdorf (DE)
(72) Erfinder: Urban, Hans, 83527 Haag (DE); Schletter, Ludwig, 83527 Haag (DE)

(57) **Zusammenfassung**

Die Vorrichtung zum Verbinden einer Profilschiene mit einem anderen Bauteil umfasst einen Grundkörper (1), einen Klemmkeil (2) und eine Spannschraube (3). Der Grundkörper (1) weist einen Hakensteg (7) zum Eingriff in eine hinterschnittene Längsnut der Profilschiene sowie eine Gleitrampe (10) auf, auf welcher der Klemmkeil (2) verschieblich angeordnet ist. Die Spannschraube (4) durchdringt den Klemmkeil (2) und die Gleitrampe (10). Mit Festziehen der Spannschraube (4) schiebt der Klemmkeil (2) die Gleitrampe (10) abwärts und drückt die Profilschiene gegen den Hakensteg (7), so dass diese im Grundkörper (1) fest eingespannt ist. Außerdem wird mit derselben Spannschraube (4) zugleich der Grundkörper (1) gegen das andere Bauteil verspannt. Das andere Bauteil kann insbesondere eine weitere Profilschiene oder ein Dachhaken sein.

## Beschreibung

Die Erfindung betrifft eine Vorrichtung zum Verbinden einer eine hinterschnittene Längsnut aufweisenden Profilschiene mit einem anderen Bauteil sowie die Anordnung dieser Vorrichtung.

Derartige Vorrichtungen werden unter anderem in großer Zahl in Unterkonstruktionen für Solarmodulreihen auf Dächern und Freiflächen verbaut. Die Profilschienen sind dort insbesondere mit Bauteilen wie Dachhaken, Blechfalzklemmen oder anderen, kreuzenden Profilschienen fest zu verbinden.

Die bekannten Vorrichtungen weisen jedoch hinsichtlich Herstellungskosten, Einsatzbereich, Montageeigenschaften oder Verbindungsqualität Nachteile auf.

Aufgabe der Erfindung ist es daher, eine Vorrichtung der eingangs genannten Art zu schaffen, die zwischen der Profilschiene und Bauteilen unterschiedlicher Gattung universell eine statisch günstige Verbindung erzeugen kann und dabei besonders schnell und einfach zu montieren sowie außerdem kostengünstig herstellbar ist.

Die Lösung der Aufgabe erfolgt mit der im Anspruch 1 angegebenen Vorrichtung. Demgemäß umfasst die Vorrichtung zum Verbinden einer eine hinterschnittene aufweisenden Profilschiene mit einem anderen Bauteil einen Grundkörper, einen Klemmkeil und eine Spannschraube.

Der Grundkörper weist für die Profilschiene eine Auflagefläche und einen von der Auflagefläche abstehenden Hakensteg auf, der zum Eingriff in die Hinterschneidung der Längsnut ausgeführt ist. Der Grundkörper verfügt zudem über eine Gleitrampe, die relativ zur Auflagefläche und parallel zum Hakensteg ansteigt. Außerdem ist der Klemmkeil auf der Gleitrampe angeordnet und mittels der Spannschraube verschiebbar. Hierbei durchdringt die Spannschraube den Klemmkeil in einer ersten Auslassung und die Gleitrampe in einer zweiten Auslassung, wobei die erste und/oder die zweite Auslassung eine quer zum Hakensteg gerichtete Längsauslassung ist. Und schließlich weist der Grundkörper eine der Auflagefläche gegenüberliegende Rückfläche auf, an der die Vorrichtung mittels der Spannschraube gegen das andere Bauteil verspannbar ist.

Mithilfe der erfindungsgemäßen Vorrichtung können insbesondere bewährte Standard-Profilschienen mit im Wesentlichen rechteckigem oder quadratischem Querschnitt fest mit anderen Bauteilen verbunden werden. Derartige Profilschienen können im Strangpressverfahren mit komplexen Innenkonturen und bevorzugt aus einem Aluminium hergestellt sein. Die hinterschnittene Längsnut ist an einer der Außenseiten der Profilschiene vorgesehen und kann dort vorzugsweise mittig verlaufen. Insbesondere zur Montage von Solarmodulen ist es möglich, dass die Profilschiene an den anderen Außenseiten weitere hinterschnittene Längsnuten aufweist, bevorzugt je eine an sich gegenüberliegenden Außenseiten. Die Längsnut kann außerdem beidseitig hinterschnitten sein, so dass sie sich zur Aufnahme von Schraubmuttern oder anderen verschraubbaren Nutsteinen eignet.

Das andere Bauteil, mit dem die Profilschiene fest zu verbinden ist, kann insbesondere ein Dachhaken, eine Blechfalzklemme, ein Befestigungselement für Well- und Trapezdächer und dergleichen sowie auch eine weitere Profilschiene sein. Im Fall einer weiteren Profilschiene können sich die beiden Profilschienen kreuzen, vorzugsweise in einem rechten Winkel. Aber auch andere Kreuzungswinkel sind möglich. Bei der Anwendung in Unterkonstruktionen für Solarmodule ist diesen, anderen Bauteilen gemein, dass sie als Tragelemente für die Profilschiene eingesetzt werden und ihre Montageflächen üblicherweise geneigt, z.B. um 30°, und im Regelfall plan sind. In dem anderen Bauteil kann zur Schraubverbindung mit der Vorrichtung eine Durchgangsbohrung oder ein Innengewinde, vorzugsweise jedoch ein Langloch, ein Schlitz oder eine hinterschnittene Nut vorgesehen sein, so dass die Spannschraube mittels einer Schraubmutter oder eines verschraubbaren Nutsteins mit dem Bauteil verschraubbar ist.

Der Grundkörper der Vorrichtung ist räumlich zwischen der Profilschiene und dem anderen Bauteil vorgesehen, d. h. es ist nicht erforderlich, dass sich die Profilschiene und das andere Bauteil zum Verbinden mittels der Vorrichtung berühren. Der Grundkörper kann entlang des Hakenstegs beliebig breit sein, wobei sich eine Breite zwischen 2 und 5 cm als besonders geeignet erwiesen hat.

Die Auflagefläche und der Hakensteg sind zum Aufsetzen und Einschieben der Profilschiene vorgesehen, wobei der Zusammensetz- bzw. Einhängevorgang bevorzugt durch zwei zueinander senkrechte Bewegungskomponenten gekennzeichnet ist: ein im Wesentlichen senkrechtes Aufsetzen der Profilschiene auf die Auflagefläche sowie ein anschließendes Querverschieben hin zum Hakensteg. Die Auflagefläche ist daher vorzugsweise plan ausgeführt. Es versteht sich von selbst, dass die Querschnittskontur des Hakenstegs auf diejenige der hinterschnittenen Längsnut in geeigneter Weise abgestimmt ist. Insbesondere die Höhe und die Breite des Überstands des Hinterschnitts sowie die Weite des Öffnungsschlitzes, der von dem Überstand begrenzt ist, sind zu berücksichtigen. Der Hakensteg ist in Art einer Leiste ausgeführt und kann die Stützfläche in zwei Hälften unterteilen, vorzugsweise von ungefähr gleicher Größe, so dass sich die Profilschiene an ihrer Außenseite beidseits der hinterschnittenen Längsnut im Querschnitt vollständig auf der Auflagefläche abstützen kann.

Die Gleitrampe kann als gewöhnlicher Keil oder in auch in anderer Form mit einer zur Auflagefläche aufsteigenden und bevorzugt planen Gleitfläche ausgeführt sein, wobei die Auflagefläche vorzugsweise in einem Knick in die Gleitrampe übergeht. Die Funktion der Gleitrampe ist über einen weiten Steigungsbereich gegeben, wobei sich eine Steigung von ungefähr 1 zu 0,7 als praktisch erwiesen hat.

Die Spannschraube kann eine gewöhnliche Kopfschraube sein, die mit ihrem Kopf auf dem Klemmkeil sitzt und zum Eindrehen in ein Innengewinde vorgesehen ist. Es ist aber auch denkbar, dass die Spannschraube dem anderen Bauteil zugeordnet ist, so dass der Grundkörper und der Klemmkeil zur Montage auf diese aufzusetzen sind, und die Spannschraube praktischerweise mit einer sich auf dem Klemmkeil abstützenden Mutter angezogen werden kann. Außerdem kann die Spannschraube den Klemmkeil und die Gleitrampe vorzugsweise senkrecht zur Auflagefläche durchdringen, was die Kompatibilität der Vorrichtung mit dem anderen Bauteilen erhöht. Es soll alternativ aber auch möglich sein, die Spannschraube schräg zur Auflagefläche zu führen, z. B. senkrecht zur Rückfläche, falls diese nicht zur Auflagefläche parallel ist. Für Spezialanwendungen sind, insbesondere aus statischen Gründen, weitere Winkel denkbar. In diesen Fällen kann die Oberseite des Klemmkeils an die schräg geführte Spannschraube angepasst sein.

Die erste und zweite Auslassung im Klemmkeil bzw. in der Gleitrampe sind durchgehende Auslassungen, insbesondere Durchgangslöcher. Als Längsauslassung eignet sich vor allem ein durchgehendes Langloch. Aber auch einseitig offene Schlitze sind beispielsweise denkbar.

Der Klemmkeil ist von einem im Wesentlichem dreieckigen Querschnitt, so dass vorzugsweise eine zur Auflagefläche parallele Oberseite, an der die Spannschraube angesetzt werden kann, eine zur Auflagefläche senkrechte Seite, die zum Anpressen an die Profilschiene bestimmt ist, sowie eine schräge Gleitseite, mit der der Klemmkeil auf der Gleitrampe sitzt, vorgesehen sind.

Die Rückfläche der Vorrichtung weist vorzugsweise einen planen Abschnitt auf oder kann vollständig plan sein. Bei ebenfalls planer Auflagefläche ergibt sich so zwischen der Auflageund der Rückfläche ein plattenartiger Grundkörper, von dem der Hakensteg absteht.

Die Montage der Vorrichtung erfolgt bevorzugt in drei Schritten: Im ersten Schritt wird die Vorrichtung mittels der Spannschraube am anderen Bauteil lose vorfixiert, wobei der Klemmkeil am oberen Abschnitt der Gleitrampe verbleiben kann. Beispielsweise kann die Vorrichtung auf dem Bügel eines Dachhakens aufgesetzt und mit der Spannschraube in dem einen Langloch des Bügels lose gehalten sein, wobei die Spannschraube an der Rückseite des Bügels bereits mit einer Mutter gesichert sein kann. Im zweiten Schritt kann die Profilschiene auf den Grundkörper aufgesetzt und anschließend gegen den Hakensteg verschoben werden. Im letzten Schritt wird schließlich die Spannschraube angezogen, wobei in vorteilhafter Weise die Vorrichtung bzw. deren Grundkörper an der Rückfläche gegen das andere Bauteil verspannt und zugleich die Profilschiene sicher im Grundkörper eingespannt wird. Ist dabei die Längsauslassung in der Gleitrampe vorgesehen und im Klemmkeil lediglich eine Durchgangsbohrung, so verschiebt sich die Spannschraube einheitlich mit dem Klemmkeil, so dass es zweckmäßig sein kann, im anderen Bauteil ebenfalls eine Längsauslassung vorzusehen, welche die Bewegung der Spannschraube aufnehmen kann.

Für eine Mehrfachmontage in einer Reihe können mehrere Vorrichtungen in der vorbeschriebenen Weise vorfixiert sein, so dass die Profilschiene gleichzeitig mit mehreren Vorrichtungen zusammensetzbar ist, wobei ggf. einzelne Vorrichtungen zu Ausgleichszwecken quer zur Reihe bzw. quer zur Profilschiene zu verschieben sind. Nachdem die Profilschiene mit allen Vorrichtungen zusammengesetzt und die Profilschiene korrekt ausgerichtet ist, können alle oder ggf. die restlichen Spannschrauben fest angezogen werden.

Es sind aber auch andere Montageabfolgen denkbar. So ist beispielsweise möglich, die Vorrichtung zunächst an der Profilschiene einzuhängen und anschließend die Vorrichtung einschließlich der Profilschiene auf das andere Bauteil aufzusetzen oder auch das andere Bauteil an die Vorrichtung aufzusetzen. Ebenso ist die Erfindung nicht auf bestimmte räumliche Ausrichtungen der Vorrichtung beschränkt.

Die erfindungsgemäße Vorrichtung besticht im Vergleich zu den bekannten Lösungen besonders durch ihre einfache und schnelle Montage sowie den großen Einsatzbereich. Wesentlich dabei ist, dass mit ein und derselben Spannschraube sowohl die Profilschiene in der Vorrichtung eingespannt als auch die Vorrichtung selbst mit dem anderen Bauteil verspannt werden kann. Die Spannschraube kann dabei passend zum übrigen System ausgewählt sein, so dass keine zusätzlichen Werkzeuge erforderlich sind, was insbesondere beim Einsatz auf Dächern von großem Vorteil ist. Außerdem ist von Vorteil, dass die Spannschraube von oben her betätigbar ist und die Profilschiene durch bloßes Einschieben bzw. Einhängen in die vormontierte Vorrichtung bereits vorfixiert sein kann.

Der große Einsatzbereich ergibt sich dadurch, dass das andere Bauteil lediglich eine einfach gehaltene Montagefläche sowie eine Anschraubmöglichkeit aufzuweisen braucht. Außerdem kann der Grundkörper an eine Vielzahl unterschiedlicher Profilschienen angepasst werden. Die Vorrichtung kann sofort endmontiert oder aber auch in einem oder zwei Schritten vormontiert werden, was besonders bei einer Reihenmontage von großem Wert ist. So kann die Vorrichtung zuerst mit dem anderen Bauteil, beispielsweise mit einem Dachhaken, verbunden werden, ohne dabei die Spannschraube fest anzuziehen, so dass der Klemmkeil sich noch im oberen Abschnitt der Gleitrampe befindet. Anschließend kann die Profilschiene in die Vorrichtung eingesetzt werden, wobei die Lage der Vorrichtung zu Ausgleichs- oder Justagezwecken am anderen Bauteil noch einfach veränderbar, insbesondere verschiebbar ist. Außerdem ist es möglich, die Vorrichtung gegenüber dem anderen Bauteil zu verdrehen, so dass nahezu beliebige Kreuzungswinkel möglich sind oder beispielsweise die unpräzise Montage eines Dachhakens einfach korrigiert werden kann.

Auch in statischer Hinsicht bietet die Vorrichtung Vorteile. So wird die Schiene durch den Hakensteg sehr nahe am Schwerpunkt ihres Querschnitts gehalten. Zudem führt die Schraubverbindung statisch günstig sehr nahe am Profilquerschnitt vorbei. Außerdem ist die Verbindung statisch in einfacher Weise berechen- bzw. dokumentierbar.

In einer bevorzugten Ausführungsform weist der Hakensteg zum Klemmen der Profilschiene eine Klemmschräge auf. Die Klemmschräge ist vorzugsweise an der einen Unterseite des Haltevorsprungs des Hakensteges angeordnet. Beim Einhängen der Profilschiene bzw. beim Einschieben des Überstandes der hinterschnittenen Längsnut unter den Haltevorsprung wird auf diese Weise die Profilschiene im Grundkörper klemmend gehalten. Hierbei ist die Querschnittkontur des Hakenstegs bevorzugt so gewählt, dass die Stirnseite des Überstandes nicht am Hakensteg anstehen kann, so dass stets eine sichere Klemmverbindung entsteht. Dieses ergänzende Klemmen der Profilschiene mittels des Hakenstegs erleichtert die Montage in schrägen Ebenen enorm, beispielsweise auf Schrägdächern. So kann die Profilschiene bei noch geöffneter Vorrichtung, d. h. der Klemmkeil befindet sich noch am oberen Abschnitt der Gleitrampe, bereits relativ fest in der Vorrichtung eingeklemmt sein, wobei die Vorrichtung selbst noch am anderen Bauteil verschieb- und verdrehbar ist. Der Vorteil des vorläufigen Haltens der Profilschiene mittels der Klemmschräge ist besonders groß, falls der Grundkörper in der Weise geneigt angeordnet ist, dass der Haltevorsprung des Hakenstegs abwärts gerichtet ist, so dass ohne die Klemmschräge die Profilschiene nicht am Hakensteg gehalten werden könnte.

In einer bevorzugten Ausführungsform ist der Grundkörper längs des Hakenstegs extrudiert. Der Grundkörper kann daher kostengünstig durch bloßes Ablängen von einem Strangteil hergestellt sein. Die durchgehende Auslassung in der Gleitrampe ist freilich nachträglich einzubringen, z. B. durch Bohren, Fräsen oder vorzugsweise Ausstanzen. Auf dieselbe Art kann im Übrigen auch der Klemmstein hergestellt sein.

In einer weiteren bevorzugten Ausführungsform ist eine Verliersicherung vorgesehen, die den Klemmkeil auf der Gleitrampe hält. Hierbei ist es von großem Vorteil, wenn die Verliersicherung elastisch wirkt, so dass der Klemmkeil im gesamten Verschiebebereich auf der Gleitrampe gegen Verlieren gesichert ist. Die elastische Verliersicherung kann dabei insbesondere ein Gummiband, ein Gummiring oder dergleichen sein.

Im Zusammenhang mit dem Einhängen der Profilschiene hat es sich als besonders montagefreundlich erwiesen, wenn die Verliersicherung den Klemmkeil im oberen Abschnitt der Gleitrampe elastisch hält. Auf diese Weise kann die Profilschiene in die am anderen Bauteil bereits vormontierte Vorrichtung eingehängt werden, ohne den Klemmkeil verschieben oder erst nachträglich aufsetzen zu müssen. Eine als Gummiring ausgeführte elastische Verliersicherung kann in praktischer Weise einerseits in eine Nut am rückseitigen Bereich der Gleitrampe und andererseits in eine Nut an der zur Profilschiene gerichteten Seite des Klemmkeils eingelegt sein.

In einer bevorzugten Weiterbildung ist dabei am oberen Ende der Gleitrampe ein Anschlag für den Klemmkeil vorgesehen, so dass die elastische Verliersicherung bei noch nicht eingesetzter Spannschraube den Klemmkeil nicht über das obere Ende der Gleitrampe hinausziehen kann. In einer bevorzugten Ausführung ist im Anschlag eine den Klemmkeil teilweise aufnehmende Nut vorgesehen. Auf diese Weise wird der Klemmkeil noch sicherer am oberen Ende der Gleitrampe blockiert.

In einer weiteren bevorzugten Ausführungsform ist der Grundkörper im Bereich zwischen der Rückseite der Gleitrampe und dem anderen Bauteil ausgespart, wobei die Gleitrampe an ihrem oberen Abschnitt mit einer Abstützung zum anderen Bauteil versehen ist. Auf diese Weise kann die Gleitrampe insbesondere plattenartig ausgeführt sein, so dass, im Gegensatz zu einer keilförmigen Ausführung, die Rückseite der Gleitrampe nicht auf dem anderen Bauteil zu liegen kommt und zudem weniger Material für den Grundkörper erforderlich ist. Die zusätzliche Abstützung stellt dabei sicher, dass die Kräfte beim Anziehen der Spannschraube günstig zum anderen Bauteil abgeleitet werden und der Grundkörper insbesondere nicht kippt.

In einer weiteren bevorzugten Ausführungsform weist der Grundkörper im Bereich rückseits der Gleitrampe eine Erhöhung auf, die über die Rückfläche des Grundkörpers in geringem Maß hervorsteht. Das bedeutet: Wird die Vorrichtung auf die plane Oberfläche des anderen Bauteils gesetzt, berührt der Grundkörper das andere Bauteil zunächst lediglich an der Erhöhung sowie am dazu gegenüberliegenden Ende der Rückfläche. Die Rückfläche ist demzufolge gegenüber der planen Oberfläche des anderen Bauteils in geringem Maß vorgeneigt, so dass erst beim Anziehen der Spannschraube der Hauptteil der Rückfläche gegen das andere Bauteil gepresst wird und dabei im Grundkörper, vorzugsweise im Bereich des Hakenstegs, aufgrund der Elastizität des beim Anziehen verformten Grundkörpers eine anpressende Vorspannkraft entsteht, die von Vorteil ist.

In einer bevorzugten Kombination der beiden vorbeschriebenen Ausführungsformen ist die Erhöhung ein an der Abstützung der Gleitrampe vorgesehener Fuß.

In einer bevorzugten Anordnung der Vorrichtung ist das andere Bauteil geneigt und die Vorrichtung so auf dem anderen Bauteil angeordnet, dass der Haltevorsprung des Hakenstegs nach unten gerichtet und die Profilschiene in die Vorrichtung eingesetzt ist. Auf diese Weise ist der Schwerpunkt des Querschnitts der Profilschiene oberhalb der Schraubverbindung angeordnet, was aus statischen Gründen von großem Vorteil ist. In diesem Fall ist das Vorsehen einer Klemmschräge am Hakensteg besonders vorteilhaft, weil dadurch die Profilschiene am Hakensteg entgegen der Hangabtriebskraft klemmend gehalten ist.

Bei der vorbeschriebenen Anordnung kann das andere Bauteil insbesondere ein Dachhaken, eine Blechfalzklemme, ein Befestigungselement für Well- oder Trapezdächer oder eine andere Profilschiene sein. Ist das andere Bauteil eine andere Profilschiene, so kann diese die Profilschiene, die in der Vorrichtung sitzt, kreuzen, vorzugsweise in einem rechten Winkel. Andere Kreuzungswinkel sind jedoch ebenso denkbar.

Nachfolgend werden ein Ausführungsbeispiel der Erfindung sowie drei bevorzugte Anordnungen des Ausführungsbeispiels anhand von Zeichnungen näher erläutert. Es zeigen:
**Fig. 1** eine Seitenansicht einer erfindungsgemäßen Vorrichtung,
**Fig. 2** einen Querschnitt der Vorrichtung gemäß **Fig. 1** zusammen mit einer
   aufgesetzten Profilschiene,
**Fig. 3** einen Querschnitt wie **Fig. 2**, die Profilschiene jedoch eingespannt,
**Fig. 4** eine Seitenansicht einer ersten Anordnung der Vorrichtung gemäß **Fig. 1**
   zusammen mit zwei sich kreuzenden Profilschienen,
**Fig. 5** eine Vorderansicht der ersten Anordnung gemäß **Fig. 4**,
**Fig. 6** eine Perspektivansicht der ersten Anordnung gemäß **Fig. 4**,
**Fig. 7** eine Seitenansicht einer zweiten Anordnung der Vorrichtung gemäß **Fig. 1**
   zusammen mit einer Profilschiene und einem Dachhaken,
**Fig. 8** eine Perspektivansicht der zweiten Anordnung gemäß **Fig. 7**,
**Fig. 9** eine perspektivische Explosionsansicht einer dritten Anordnung mit einer
   leicht abgewandelten Vorrichtung gemäß **Fig. 1**,
**Fig. 10** eine perspektivische Ansicht einer leicht abgewandelten Vorrichtung gemäß **Fig. 1**.

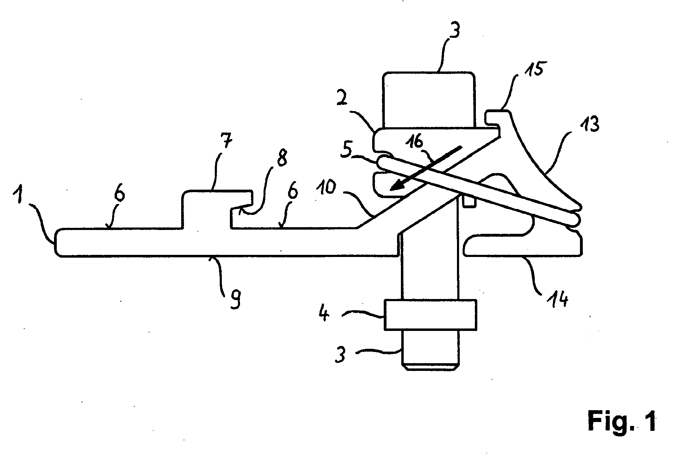

Die in **Fig. 1** dargestellte Vorrichtung setzt sich aus folgenden Bauteilen zusammen: einem Grundkörper **1**, einem Klemmkeil **2**, einer Spannschraube **3**, einer Vierkantmutter **4** und einem Gummiring **5**.

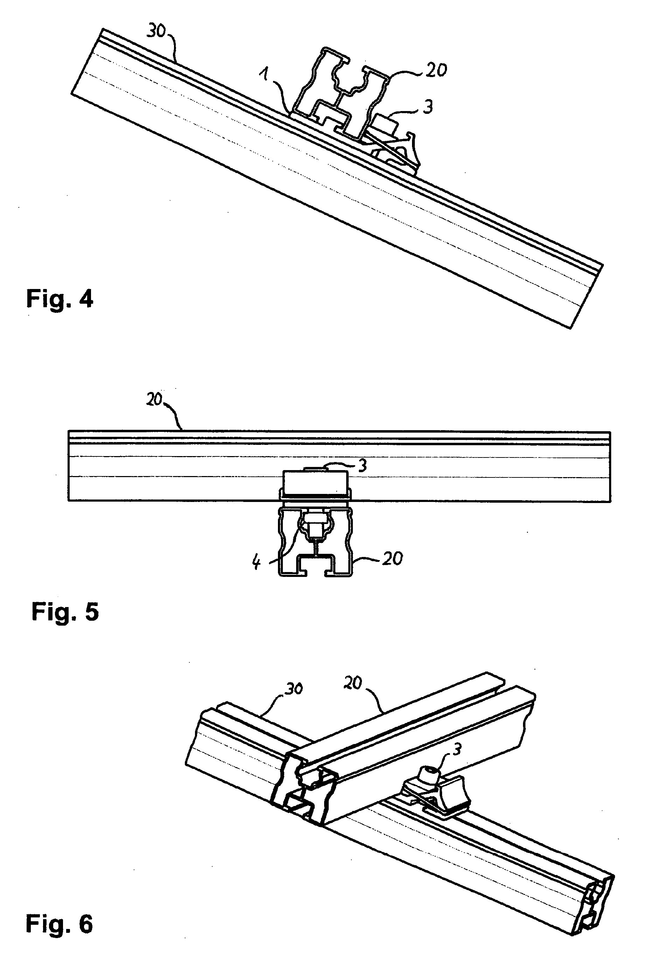

Wie aus **Fig. 4** bis **Fig. 8** ersichtlich ist, wird die Vorrichtung dazu verwendet, eine Profilschiene 20, die eine hinterschnittene Längsnut 21 aufweist, mit einem anderen Bauteil zu verbinden. Das andere Bauteil kann insbesondere eine andere, kreuzende Profilschiene 30, ein Dachhaken, eine Blech- oder Trapezdachbefestigung sein. Die Profilschiene **20** eignet sich insbesondere zur Montage von Solarmodulen.

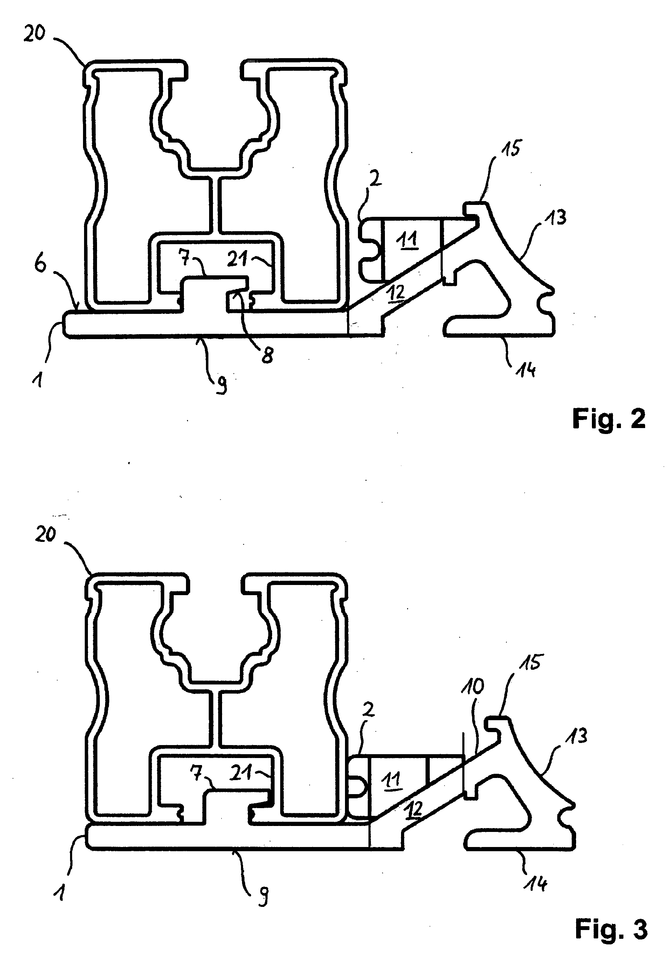

Der Grundkörper **1** der Vorrichtung gemäß **Fig. 1** ist senkrecht zur Zeichnungsebene extrudiert und weist eine Auflagefläche **6** sowie einen von der Auflagefläche 6 abstehenden Hakensteg **7** auf. Die Auflagefläche 6 und der Hakensteg 7 sind zum klemmenden Halten der Profilschiene **20** vorgesehen, wobei der Hakensteg **7** für den Eingriff in die Hinterschneidung der Längsnut **21** der Profilschiene **20** ausgeführt ist. Der Hakensteg **7** ist an der Unterseite seines in der Zeichnung nach rechts gerichteten Haltevorsprungs gegenüber der Auflagefläche 6 um etwa 10° geöffnet. Wie in den **Fig. 2** und **Fig. 3** näher zu erkennen ist, wirkt dies Öffnung des Haltevorsprungs als Klemmschräge **8** für den in der Zeichnung rechten Überstand der hinterschnittenen Längsnut **21**. Die Profilschiene 20 wird daher beim Einschieben sowohl formschlüssig als auch mit einer geringen Vorspannung kraftschlüssig im Grundkörper **1** der Vorrichtung vorfixiert. Aufgrund der Klemmschräge **8** kann zudem der Überstand der hinterschnittenen Längsnut **20** einfach unter den Haltevorsprung des Hakenstegs **7** eingeführt werden.

Außerdem ist ersichtlich, dass der Hakensteg **7** die Auflagefläche **6** in zwei ungefähr gleich große Teilflächen unterteilt, die für die Außenflächen der Profilschiene **20** beidseits der hinterschnittenen Längsnut **21** vorgesehen sind. Die Auflagefläche **6** bzw. deren beide Teilflächen sind ausreichend groß um die Profilschiene 20 quer vollständig aufzunehmen und um außerdem das Ein- und Ausschieben der Profilschiene **20** in bzw. aus dem Hakensteg **7** zu ermöglichen.

Der Grundkörper **1** weist ferner eine der Auflagefläche **6** gegenüberliegende Rückfläche **9** auf, an der die Vorrichtung mit dem anderen Bauteil zusammensetzbar ist. Die Auflagefläche **6** und die Rückfläche **9** sind beide plan ausgeführt und zueinander parallel, so dass der Grundkörper **1** in diesem Bereich plattenartig geformt ist.

Der Grundkörper **1** weist ferner eine Gleitrampe **10** auf, die relativ zur Auflagefläche **6** und parallel zum Hakensteg 7 ansteigt. Hierbei geht die Auflagefläche **6** an einem Knick direkt in die Gleitrampe **10** über. Wesentlich ist, dass der Hakensteg **7** mit seinem Haltevorsprung zur Gleitrampe gerichtet ist. Außerdem ist die Gleitrampe **10,** wie aus **Fig. 2** und **Fig. 3** näher ersichtlich, entlang ihrer Steigung bzw. quer zum Hakensteg **7** von einem Langloch 12 durchsetzt. Des Weiteren ist zu erkennen, dass die Gleitrampe **10** ebenfalls plattenartig ausgeführt ist, so dass der Dreiecksbereich unterhalb der Gleitrampe **10** materialfrei ist und das Langloch 12 daher einfach ausgestanzt werden kann. Die Gleitrampe 10 ist ferner an ihrem oberen Ende mit einer Abstützung **13** zum anderen Bauteil versehen. Die Abstützung 13 verfügt dabei zum Aufsetzen auf das andere Bauteil über einen flächigen Fuß **14**. Zudem ist zu erkennen, dass zwischen dem Fuß **14** und der Rückfläche **9** die Spannschraube **3** zum anderen Bauteil führt.

Der Klemmkeil **2** ist von im Wesentlichem dreieckigen Querschnitt, und weist dementsprechend eine zur Auflagefläche **6** parallele Oberseite, eine zu einer Außenseite der Profilschiene **21** parallele Klemmseite und eine schräge Gleitseite auf. Der Klemmkeil **2** ist, wie aus den **Fig. 2** und **Fig. 3** näher ersichtlich, zum Einspannen der Profilschiene **20** gegen den Hakensteg 7 vorgesehen. Der Klemmkeil 2 ist hierzu auf der Gleitrampe **10** mittels der Spannschraube **3** entlang des Pfeils 16 verschiebbar angeordnet, wobei die Spannschraube **3** mit ihrem Kopf auf der Oberseite des Klemmkeils **2** abgestützt ist und den Klemmkeil **2** senkrecht zur Auflagefläche 6 durchdringt und im Langloch **12** der Gleitrampe **10** geführt ist. Der Klemmkeil **2** weist hierzu, wie aus den **Fig. 2** und **Fig. 3** näher ersichtlich ist, eine Durchgangsbohrung **11** auf, die mit dem Langloch 12 fluchtet.

Wie insbesondere in **Fig. 1** zu erkennen ist, wird der Klemmkeil 2 einschließlich der Spannschraube **3** und der Vierkantmutter **4** von einem Gummiring 5 auf der Gleitrampe 10 in einem oberen Abschnitt gehalten. Dort befindet sich der Klemmkeils **2** in geöffneter bzw. nicht klemmender Position. Zum Halten des Klemmkeils **2** ist der Gummiring **5** in zwei Nuten eingesetzt, von denen eine an der Klemmseite des Klemmkeils **2** und eine an der von der Gleitrampe **10** abgewandten Seite des Fußes **14** ausgenommen ist. Auf diese Weise kreuzt der Gummiring **5** die Gleitrampe **10** auf beiden Seiten, wobei der Gummiring **5** beim Abwärtsbewegen des Klemmkeils **2** entlang des Pfeils **16** zusätzlich gespannt wird. Schließlich ist am oberen Ende der Gleitrampe **10** ein Anschlag **15** für den Klemmkeil **2** angeordnet. In dem Anschlag **15** ist eine den Klemmkeil teilweise aufnehmende Nut vorgesehen, die sicherstellt, dass der Klemmkeil **2**, sofern die Spannschraube 3 noch nicht angezogen ist, trotz der Zugkraft des Gummirings **5** auf der Gleitrampe **10** verbleibt.

Die **Fig. 2** und **Fig. 3** zeigen insbesondere, wie die Profilschiene **20** in die Vorrichtung gemäß **Fig. 1** eingesetzt und mittels des auf der Gleitrampe **10** verschiebbaren Klemmkeils 2 eingespannt werden kann. Außerdem ist in diesen Querschnitten die Durchgangsbohrung **11** im Klemmkeil **2** sowie das Langloch **12** in der Gleitrampe **10** ersichtlich. Auf die Darstellung der Spannschraube **3** mit der Vierkantmutter **4** sowie des Gummirings 5 wurde verzichtet.

Die Profilschiene **20** hat einen rechteckigen Querschnitt und ist sowohl an ihrer Ober- als auch an ihrer Unterseite mit einer hinterschnittenen Längsnut versehen. Die Profilschiene 20 ist mit ihrer planen Unterseite, aus der die hinterschnittenen Längsnut **21** ausgespart ist, so auf die Auflagefläche **6** und den Hakensteg **7** aufgelegt, dass der Hakensteg **7** parallel in die hinterschnittene Längsnut **21** ragt und die Unterseite der Profilschiene beidseits der Längsnut **21** auf den Teilflächen der Auflagefläche **6** aufliegt. Die Querschnittkontur des Hakenstegs **7** ist auf diejenige der hinterschnittenen Längsnut **21** in geeigneter Weise abgestimmt, wobei die Klemmschräge **8** so ausgeführt ist, dass die Stirnseite des Überstandes nicht am Hakensteg **7** anstoßen kann, so dass beim Einschieben stets eine kraftformschlüssige Verbindung zwischen dem Grundkörper 1 und der Profilschiene 20 entsteht.

In **Fig. 2** ist die Vorrichtung in noch geöffneter Position und mit aufgesetzter, aber noch nicht eingeschobener Profilschiene **20** dargestellt. Demzufolge ist der Klemmkeil **2** am oberen Ende der Gleitrampe **10** angeordnet und der Hakensteg **7** greift noch nicht in die hinterschnittene Längsnut **21** ein.

Aus **Fig. 3** ist nun die Vorrichtung in geschlossener Position ersichtlich. Die Profilschiene **20** wurde auf der Auflagefläche **6** entweder von Hand oder ggf. bereits mittels des Klemmkeils **2** quer an den Hakensteg verschoben bzw. unter diesen eingeführt, wobei die Klemmschräge **8** den Überstand der hinterschnittenen Längsnut **21** formschlüssig wie auch mit einer geringen Vorspannung vorfixiert. Das feste Einspannen der Profilschiene **20** gegen den Hakensteg erfolgt sodann mittels festem Anziehen der Spannschraube **3**, wobei der Klemmkeil **2** mit seiner Klemmseite gegen die in der Zeichnung rechte Außenseite der Profilschiene **20** gepresst wird.

Die **Fig. 4** bis **Fig. 6** zeigen eine erste bevorzugte Anordnung der Vorrichtung gemäß **Fig. 1****.** Die Vorrichtung verbindet die Profilschiene **20** gemäß **Fig. 2** und **Fig. 3** fest mit einer kreuzenden Profilschiene **30**. Die Profilschiene **30** kann insbesondere ein geneigter Bestandteil einer Dach- oder Freiflächenaufständerung für Solarmodule sein und ist deshalb exemplarisch mit einer Neigung von etwa 25° dargestellt. Außerdem weist die Profilschiene **30** denselben Querschnitt wie die Profilschiene **20** auf, d. h. auch die Profilschiene **30** verfügt an ihrer Ober- und Unterseite über hinterschnittene Längsnuten, die für Schraubverbindungen zu anderen Teilen vorgesehen sind. Zu erkennen ist außerdem, dass die Profilschiene **20** rechtwinklig kreuzend über der Profilschiene **30** angeordnet ist.

Die Vorrichtung ist an der Rückfläche **9** des Grundkörpers **1** auf die Oberseite der Profilschiene **30** aufgelegt, wobei aus statischen Gründen wesentlich ist, dass der Hakensteg **7** mit seinem Haltevorsprung nach unten bzw. die Gleitrampe **10** nach oben gerichtet ist, so dass der Schwerpunkt des Querschnitts der Profilschiene **20** oberhalb der Schraubverbindung angeordnet ist. Die Spannschraube **3** ragt in die obere hinterschnittene Längsnut der Profilschiene **30**. Dabei kann die Vorrichtung gemeinsam mit der Vierkantmutter **4** zuvor auf die Profilschiene **30** aufgeschoben sein. Es ist aber auch möglich, die Vierkantmutter **4** in der oberen Längsnut der Profilschiene **30** ungefähr an der vorgesehenen Montagestelle vorzupositionieren und die restliche Vorrichtung anschließend mit dieser zu verschrauben. In jedem Fall ist die Spannschraube **3** in der oberen hinterschnittenen Längsnut des Profils **30** mittels der Vierkantmutter **4** gekontert, wobei zwei ihrer Seitenflächen an den Nutwänden anstehen, so dass ein Verdrehen gegenüber der Profilschiene **30** blockiert ist, wie insbesondere aus **Fig. 5** ersichtlich ist. Außerdem wird aufgrund der Spannkraft des Gummirings **5** der Klemmkeil **2** einschließlich Spannschraube **3** und der Vierkantmutter **4** auf der Gleitrampe nach oben gezogen, so dass die Vierkantmutter **4** gegen den Überstand der hinterschnittenen Nut klemmt und auf diese Weise die Vorrichtung auf der Profilschiene **30** verschieblich vorfixiert sein kann. Dabei kann es sinnvoll sein, die Schraubverbindung geringfügig anzuspannen.

Die Profilschiene **20** ist wie in **Fig. 2** und **Fig. 3** mit der Vorrichtung zusammengesetzt, wobei der Klemmschräge **8** eine wesentliche Bedeutung zukommt, da nach dem Einschieben der Profilschiene in die noch geöffnete Vorrichtung die Profilschiene am Hakensteg gegen die Hangabtriebskraft klemmend gehalten ist. Es ist prinzipiell auch denkbar, die Vorrichtung zunächst auf die Profilschiene **20** aufzusetzen und aufzuschieben und anschließend beide auf die Profilschiene **30** aufzusetzen. Zur Endmontage wird durch Anziehen der Spannschraube **3** die Vorrichtung an der Rückfläche **9** gegen die Oberseite der Profilschiene **30** kraftschlüssig verspannt und dabei die Profilschiene **20** in der Vorrichtung gegen den Hakensteg **7** kraftformschlüssig eingespannt.

Für eine Reihenmontage können mehrere derartige Vorrichtungen an der Profilschiene **30** in der vorbeschriebenen Weise vormontiert sein, wobei die Profilschiene **20** gleichzeitig in die mehreren Vorrichtungen aufgesetzt und durch Einschieben an den Hakenstegen klemmend vorfixiert wird, wobei ggf. einzelne Vorrichtungen zu Ausgleichszwecken entlang der jeweiligen Profilschiene **30** entsprechend zu verschieben sind. Nachdem die Profilschiene **20** korrekt ausgerichtet ist, können alle oder ggf. die restlichen Schraubverbindungen fest angezogen werden, so dass zugleich die jeweilige feste Verbindung zwischen der Vorrichtung und der Profilschiene **30** sowie zwischen der Vorrichtung und der Profilschiene **20** erzeugt wird.

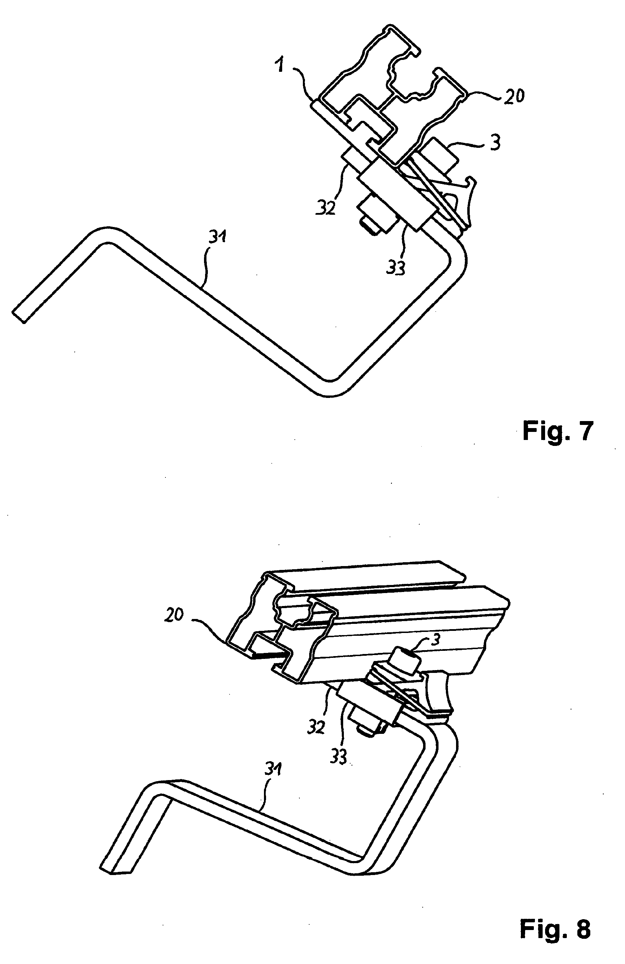

Des Weiteren zeigen die **Fig. 7** und **8** eine zweite bevorzugte Anordnung der Vorrichtung gemäß **Fig. 1****.** Die Vorrichtung verbindet die Profilschiene **20** gemäß **Fig. 4** **2** fest mit einem gewöhnlichen Dachhaken, von dem in der Zeichnung lediglich dessen mehrfach gebogener Steg **31** dargestellt ist. Ist der Dachhaken bestimmungsgemäß an einem Dach verbaut, verläuft der obere Stegabschnitt **32** des Steges **31** i. d. R. parallel zu den Dachsparren des Daches. In der Zeichnung ist der obere Stegabschnitt **32** daher mit einer Neigung von ca. 45° angeordnet. Außerdem ist in dem oberen Stegabschnitt **31**, nicht näher sichtbar, wie üblich ein Langloch für eine Schraubverbindung zu Aufsatzteilen vorgesehen.

Die Vorrichtung ist an einem Teilbereich der Rückfläche **9** des Grundkörpers **1** auf die Oberseite des oberen Stegabschnitts **32** aufgelegt, wobei aus statischen Gründen wiederum wesentlich ist, dass der Hakensteg **7** mit seinem Haltevorsprung nach unten bzw. die Gleitrampe **10** nach oben gerichtet ist, so dass der Schwerpunkt des Querschnitts der Profilschiene **20** oberhalb der Schraubverbindung angeordnet ist. Die Spannschraube **3** durchdringt das Langloch des oberen Stegabschnitts **32**, wobei die Spannschraube **3** an der Rückseite des oberen Stegabschnittes **32** mittels der Vierkantmutter **4** gemäß **Fig. 1** gekontert ist, wobei diese in ein verschiebbares Hilfsbauteil **33** integriert ist, das als Verdrehsicherung gegenüber dem oberen Stegabschnitt **32** dient, so dass zum Festhalten der Vierkantmutter **4** kein Werkzeug erforderlich ist.

Die Profilschiene **20** ist wie in **Fig. 4** bis **Fig. 6** mit der Vorrichtung zusammengesetzt, wobei die Profilschiene **20** rechtwinklig kreuzend über dem oberen Stegabschnitt **32** bzw. quer zu den Dachsparren des Daches angeordnet ist. Zur Endmontage wird wiederum durch Anziehen der Spannschraube **3** die Vorrichtung an der Rückfläche **9** gegen die Oberseite des oberen Stegabschnitts **32** kraftschlüssig verspannt und zugleich die Profilschiene **20** in der Vorrichtung kraftformschlüssig eingespannt. Eine Reihenmontage ist vergleichbar mit der auf der kreuzenden Profilschiene **30** gemäß **Fig. 4** bis **Fig. 6**, wobei anstelle der Längsnut das Langloch im oberen Stegabschnitt 32 zum Ausgleichen und Justieren verwendet werden kann.

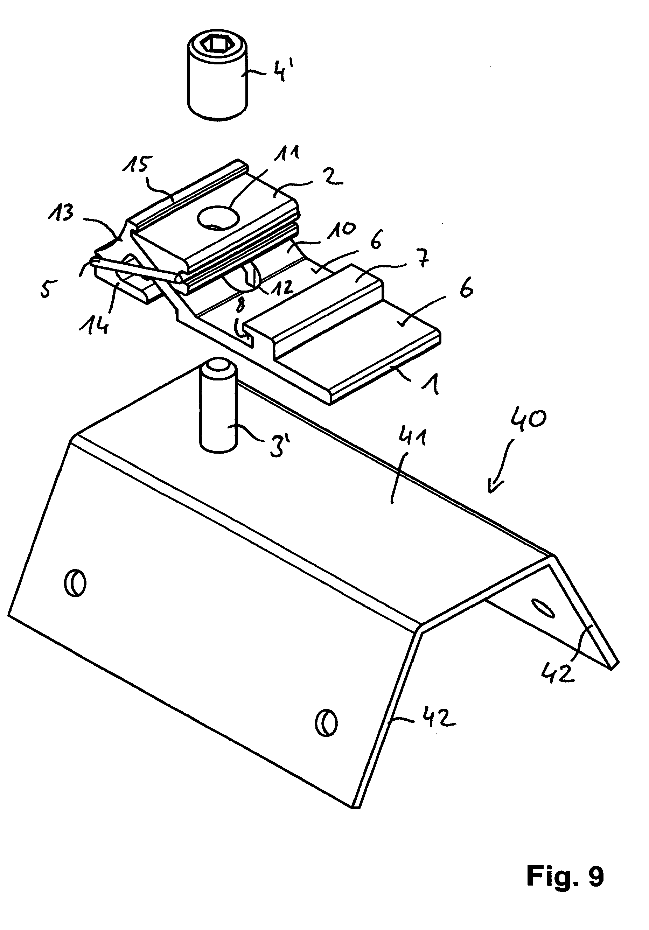

**Fig. 9** zeigt eine dritte bevorzugte Anordnung mit einer leicht abgewandelten Form der Vorrichtung gemäß **Fig. 1**. Die Vorrichtung kann eine hier nicht näher dargestellte Profilschiene **20** gemäß **Fig. 2** fest mit einem Halter **40** für Trapezbleche verbinden, einer sogenannten Trapezblechschelle. Der Halter **40** kann dazu auf eine nicht näher dargestellte Trapezrippe eines Trapezblechs aufgesetzt und mit dieser verschraubt werden. Die Seitenwangen **42** des Halters **40** umgreifen dabei die Seitenwangen der Trapezrippe. Die Vorrichtung unterscheidet sich lediglich dadurch von derjenigen gemäß **Fig. 1**, dass die Spannschraube **3'** nicht von oben, sondern von unten durch die Durchgangsbohrung **11** und das Langloch **12** geführt wird, da die Spannschraube **3'** auf der Deckseite **41** des Halters **40** in Form eines abstehenden Gewindestabes fest angeordnet ist. Außerdem ist erkennbar, dass zum Spannen ein separater Schraubenkopf **4'** vorgesehen ist, der als Hülsenmutter mit ausreichendem Gewindegang ausgeführt ist. Sonst sind die Vorrichtungen gemäß **Fig. 1** und **Fig. 9** identisch.

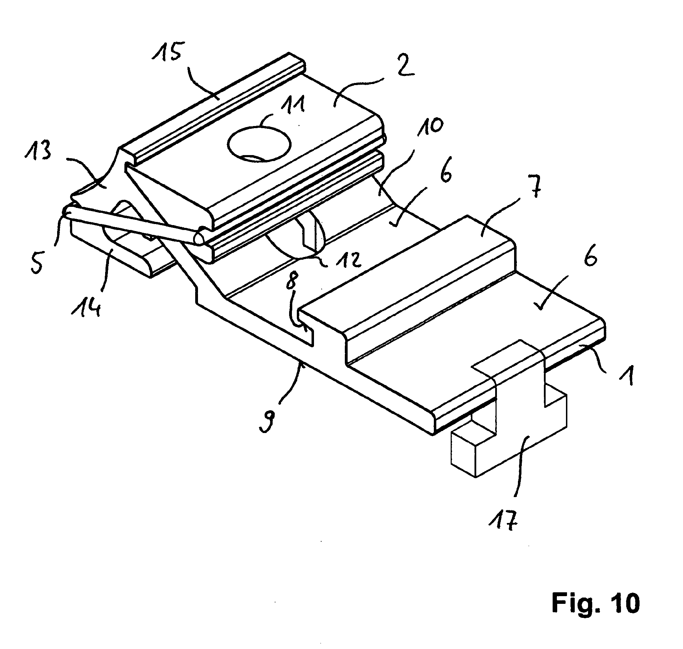

Schließlich zeigt **Fig. 10** eine leicht abgewandelte Ausführungsform der Vorrichtung gemäß **Fig. 1**, wobei auf eine Darstellung der Spannschraube **3** und der Vierkantmutter **4** verzichtet wurde. Im Unterschied zur Vorrichtung gemäß Fig. **1** ist zusätzlich ein T-förmiger Nutanker **17** vorgesehen, der in den Grundkörper **1** vorne eingearbeitet ist und von der Rückfläche **9** nach unten absteht. Der Nutanker **17** dient als zusätzliche Fixierung, falls das andere Bauteil wie in **Fig. 5** eine Profilschiene **30** mit einer zur Rückfläche **9** gerichteten hinterschnittenen Längsnut ist. Der Nutanker **17** ist dabei mit seinen Fortsätzen parallel zum Hakensteg **7** angeordnet und kann wie die Vierkantmutter **4** gemäß **Fig. 5** in der hinterschnittenen Längsnut geführt sein. Zum Aufsetzen der Vorrichtung kann der Grundkörper **1** entweder mit dem Nutanker **17** in die Längsnut eingeschoben oder aber verschwenkt von oben eingesetzt werden.

## Patentansprüche

1. Vorrichtung zum Verbinden einer eine hinterschnittene Längsnut (21) aufweisenden Profilschiene (20) mit einem anderen Bauteil (30, 31), umfassend einen Grundkörper (1), einen Klemmkeil (2) und eine Spannschraube (3, 3'), wobei
- der Grundkörper (1) für die Profilschiene (20) eine Auflagefläche (6) und einen von der Auflagefläche (6) abstehenden Hakensteg (7) aufweist, der zum Eingriff in die Hinterschneidung (21) der Längsnut (20) ausgeführt ist,
- der Grundkörper (1) eine Gleitrampe (10) aufweist, die relativ zur Auflagefläche (6) und parallel zum Hakensteg (7) ansteigt,
- der Klemmkeil (2) auf der Gleitrampe (10) angeordnet ist und mittels der Spannschraube (3, 3') verschiebbar ist,
- die Spannschraube (3, 3') den Klemmkeil (2) in einer ersten Auslassung (11) und die Gleitrampe (10) in einer zweiten Auslassung (12) durchdringt, wobei die erste und/oder die zweite Auslassung (11, 12) eine quer zum Hakensteg gerichtete Längsauslassung (12) ist,
- der Grundkörper (1) eine der Auflagefläche (6) gegenüberliegende Rückfläche (9) aufweist, an der die Vorrichtung mittels der Spannschraube (3, 3') gegen das andere Bauteil (30, 31, 40) verspannbar ist.

2. Vorrichtung nach Anspruch 1, **dadurch gekennzeichnet, dass** der Hakensteg (7) zum Klemmen der Profilschiene (20) eine Klemmschräge (8) aufweist.

3. Vorrichtung nach Anspruch 1, **dadurch gekennzeichnet, dass** der Grundkörper (1) extrudiert ist.

4. Vorrichtung nach Anspruch 1, **dadurch gekennzeichnet, dass** eine Verliersicherung (5) vorgesehen ist, die den Klemmkeil (2) auf der Gleitrampe (10) hält.

5. Vorrichtung nach Anspruch 4, **dadurch gekennzeichnet, dass** die Verliersicherung (5) elastisch wirkt.

6. Vorrichtung nach Anspruch 5, **dadurch gekennzeichnet, dass** die Verliersicherung (5) den Klemmkeil (2) im oberen Abschnitt der Gleitrampe (10) elastisch hält.

7. Vorrichtung nach Anspruch 6, **dadurch gekennzeichnet, dass** die Verliersicherung (5) ein Gummiring (5) ist, der einerseits in eine Nut am rückseitigen Bereich der Gleitrampe (10) und andererseits in eine Nut an der zur Profilschiene gerichteten Seite des Klemmkeils (2) eingelegt ist.

8. Vorrichtung nach Anspruch 6 oder 7, **dadurch gekennzeichnet, dass** am oberen Ende der Gleitrampe (10) ein Anschlag (15) für den Klemmkeil (2) vorgesehen ist.

9. Vorrichtung nach Anspruch 8, **dadurch gekennzeichnet, dass** in dem Anschlag (15) eine den Klemmkeil (2) teilweise aufnehmende Nut (15) vorgesehen ist.

10. Vorrichtung nach Anspruch 1, **dadurch gekennzeichnet, dass** der Grundkörper (1) zwischen der Rückseite der Gleitrampe (10) und dem anderen Bauteil (30, 31, 40) ausgespart ist und die Gleitrampe (10) an ihrem oberen Abschnitt mit einer Abstützung (13) zum anderen Bauteil versehen ist.

11. Vorrichtung nach Anspruch 1, **dadurch gekennzeichnet, dass** der Grundkörper im Bereich rückseitig der Gleitrampe (10) eine Erhöhung aufweist, die in geringem Maß über die Rückfläche (9) des Grundkörpers (1) hervorsteht.

12. Vorrichtung nach den Ansprüchen 10 und 11, **dadurch gekennzeichnet, dass** die Erhöhung ein an der Abstützung (13) vorgesehener Fuß (14) ist.

13. Anordnung der Vorrichtung nach Anspruch 1, **dadurch gekennzeichnet, dass** das andere Bauteil (30, 31, 40) geneigt und die Vorrichtung auf dem anderen Bauteil (30, 31, 40) so angeordnet ist, dass der eine Haltevorsprung des Hakenstegs nach unten gerichtet und die Profilschiene (20) mit der Vorrichtung zusammengesetzt ist.

14. Anordnung der Vorrichtung nach Anspruch 13, **dadurch gekennzeichnet, dass** das Bauteil (30, 31) ein Dachhaken, eine Blechfalzklemme, ein Befestigungselement für Well- oder Trapezdächer (40) oder eine andere Profilschiene (30) ist.

15. Anordnung der Vorrichtung nach Anspruch 14, **dadurch gekennzeichnet, dass** die andere Profilschiene (30) die Profilschiene (20) kreuzt.

16. Vorrichtung nach Anspruch 1, **dadurch gekennzeichnet, dass** ein T-förmiger Nutanker (17) vorgesehen ist, der von der Rückfläche (9) des Grundkörpers (1) absteht.
